# EUROPÄISCHE PATENTSCHRIFT

(11) **EP 1 859 189 B1**
(45) Veröffentlichungstag und Bekanntmachung des Hinweises auf die Patenterteilung: **28.11.2012**
(21) Anmeldenummer: 06708635.5
(22) Anmeldetag: 03.03.2006
(51) Int. Cl.: F16L 33/22, F16L 47/04

(54) **KLEMMFITTING FÜR EIN HEIZUNGS- UND/ODER SANITÄRROHR**
COMPRESSION FITTING FOR A HEATING AND/OR SANITARY PIPE
RACCORD A SERRAGE POUR UN TUYAU SANITAIRE ET/OU DE CHAUFFAGE

(30) Priorität: 14.03.2005 DE 102005011958
(43) Veröffentlichungstag der Anmeldung: 28.11.2007
(73) Patentinhaber: Uponor Innovation AB, 513 81 Fristad (SE)
(72) Erfinder: POSTLER, Stefan, 97461 Gossmannsdorf (DE)
(74) Vertreter: Epping - Hermann - Fischer
(86) Internationale Anmeldenummer: PCT/EP2006/060447
(87) Internationale Veröffentlichungsnummer: WO 2006/097409

(56) Entgegenhaltungen:
- DE-A1- 19 752 528
- DE-A1- 19 934 093
- DE-U1- 9 315 601
- US-A- 3 830 531

## Beschreibung

Die Erfindung betrifft einen Klemmfitting für ein Heizungs- und/oder Sanitärrohr, bei dem das Rohrende mittels eines Klemmrings gegen eine Stützhülse des Fittingkörpers geklemmt wird, wobei die Klemmkraft durch Verschraubung einer Überwurfmutter mit einem den Fittingkörper aufnehmenden Gegenstück aufgebracht wird.

Klemmfittinge der vorstehend beschriebenen Art (teilweise auch als Schraubfittinge bezeichnet) sind im Stand der Technik grundsätzlich bekannt, und z.B. in DE .199 34 093 A1 und DE 203 13 506 UI beschrieben. Sie weisen die oben genannten einzelnen Komponenten auf, die vor Ort montiert werden müssen. Dies ist relativ mühselig und zeitaufwendig. Außerdem besteht die Gefahr, dass beim Transport des Klemmfittings Einzelteile desselben verloren gehen.

Weitere Fittinge, bei denen eine Vormontierung möglich ist, sind aus der DE 197 52 528 A1 und der US 3,380,531 bekannt. DE 19752528A1 offenbart ein Klemmfitting mit den Merkmalen des Oberbegriffs des Anspruchs 1.

Der Erfindung liegt die Aufgabe zu Grunde, einen Klemmfitting für ein Heizungs- und/oder Sanitärrohr zu schaffen, bei dem die Montage des Klemmfittings auf das anzuschließende Rohr vereinfacht ist.

Zur Lösung dieser Aufgabe wird mit der Erfindung ein Klemmfitting für ein Heizungs - und/oder Sanitärrohr vorgeschlagen, der versehen ist mit
- einem Fittingkörper, der eine Stützhülse, auf welche ein Röhrende aufschiebbar ist, und eine konusförmige Anlagefläche aufweist,
- einem Gegenstück für den Fittingkörper, welches mit einer konusförmigen Aufnahmefläche zur Anlage durch die Anlagefläche des Fittingkörpers versehen ist,
- einem Klemmring zum Umgeben des auf die Stützhülse aufschiebbaren Rohrendes und
- einer ein Innengwinde aufweisenden und mit dem Gegenstück verschraubbaren Überwurfmutter zum Andrücken des Klemmrings gegen den Fittingkörper und zur klemmenden Anlage an dem Rohrende in dessen auf die Stützhülse aufgeschobenen Zustand,
- wobei der Fittingkörper radial vorstehende Fixiervorsprünge zur axialen Fixierung des Fittingkörpers innerhalb der Überwurfmutter an deren Innengewinde oder anderen innenliegenden Flächenausgestaltungen gegen ein unbeabsichtigtes Ablösen von der Überwurfmutter vor deren Verschraubung mit dem Gegenstück aufweist.

Bei dern erfindungsgemäßen Klemmfitting sind der Fittingkörper mit Stützhülse und konusförmiger Anlagefläche und der Klemmring in der Überwurfmutter gegen ein Herausfallen gesichert. Dies wird durch vom Fittingkörper radial vorstehende Fixiervorsprünge realisiert, die mit dem Innengewinde der Überwurfmutter zusammenwirken und ein unbeabsichtigtes Herausfallen bzw. Ablösen von Fittingkörper und dessen Stützhülse umgebenden Klemmring verhindern.

In vorteilhafter Weiterbildung der Erfindung ist vorgesehen, dass der Fittingkörper mit Stützhülse und/oder der Klemmring ein Kunststoffmaterial aufweist/aufweisen. Dieses Kunststoffmaterial ist zweckmäßigerweise faserverstärkt.

Bei einer anderen vorteilhaften Weiterbildung der Erfindung weist die konusförmige Anlagefläche des Fittingkörpers Zentriervorsprünge auf, die der Anpassung des Gegenstücks für den Fittingkörper dienen, wenn die konusförmige Aufnahmefläche des Gegenstücks einen vom Konuswinkel der Anlagefläche des Fittingkörpers abweichenden Konuswinkel aufweist. Die Anlageflächen, die zweckmäßigerweise als Vorsprünge in demjenigen Bereich ausgebildet sind, welcher sich bei Anlage des Fittingkörpers am Gegenstück außerhalb von dessen Aufnahmefläche befindet, dienen dazu, dass ein zu tiefes Eintauchen der Fittingkörper-Anlagefläche in die konusförmige Aufnahmefläche des Gegenstücks verhindert wird. Sollte nämlich die konusförmige Anlagefläche des Fittingkörpers zu weit in die konusförmige Aufnahmefläche des Gegenstücks eingetaucht sein, so besteht die Gefahr, dass die Überwurfmutter bis zur Aufbringung der auf den Klemmring wirkenden Andrückkraft bereits bis nahe an ihren Endanschlag auf das Gegenstück aufgeschraubt ist.

In weiterer vorteilhafter Ausgestaltung der Erfindung ist vorgesehen, dass die Überwurfmutter und der Fittingkörper konusförmige Andrückftächen zum Zusammenwirken mit Schrägflächen an den axialen Enden des Klemmrings aufweisen und dass der Konuswinkel) der Andruckfläche des Fittingkörpers kleiner ist als der der Andruckfläche der Überwurfmutter. Hierdurch erfolgt eine ganz gezielte Verformung des Klemmrings und des Rohres in dessen verpressten Zustand, was zu einer axialen Zugsicherung und zu einer zuverlässigen Abdichtung des Anschlussendes des Rohres an der Stützhülse führt.

Ferner kann die Stützhülse mindestens eine Umfangsnut mit einem von dieser aufgenommenen Dichtelement zur dichtenden Anlage an der Innenfläche des anzuschließenden Rohrendes aufweisen. Ein Dichtelement, das von einer Umfangsnut ausgenommen ist, kann sich auch an dem verjüngten Konusende des Fittingkörpers oder innerhalb eines sich an das verjüngte Konusende des Fittingkörpers anschließenden Abschnitts des Fittingkörpers befinden.

Die Erfindung wird nachfolgend anhand der Zeichnung näher erläutert. Im einzelnen zeigen:
- Fig. 1: die Ausgangssituation vor dem Anschluss eines Rohrendes an den Klemmfitting, wobei die Einzelteile des Klemmfittings teilweise im vormontierten Zustand gezeigt sind,
- Fig. 2: die Situation bei der Montage, in der das anzuschließende Rohrende bereits in den Zwischenraum zwischen den Klemmring und der Stützhülse des Fittingkörpers eingeschoben ist,
- Fig. 3: den Zustand des Fittingkörpers zu Beginn der Verschraubung der Überwurfmutter mit dem Fittingkörper-Gegenstück und
- Fig. 4: die Situation bei vollständig verschraubtem Klemmfitting.

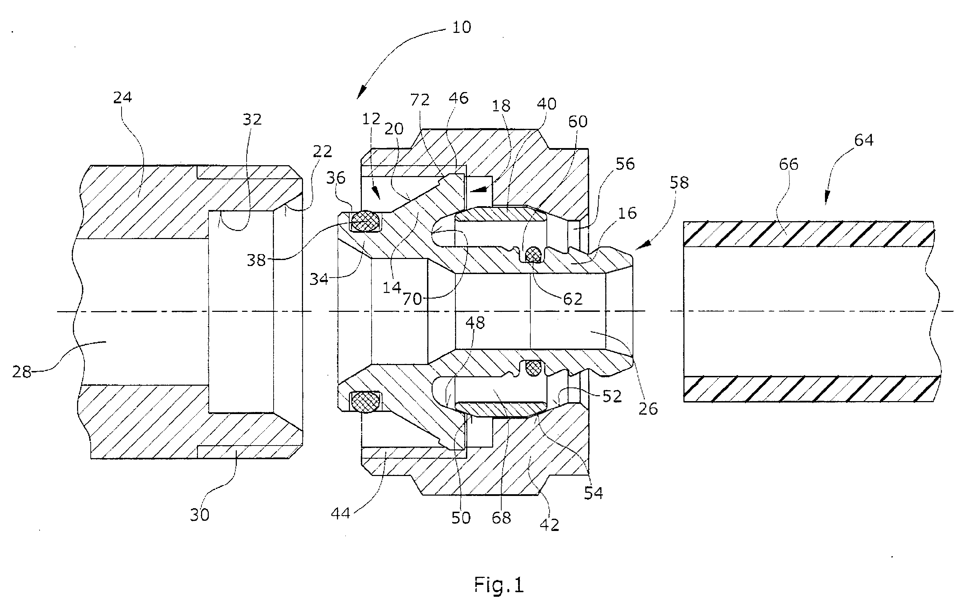

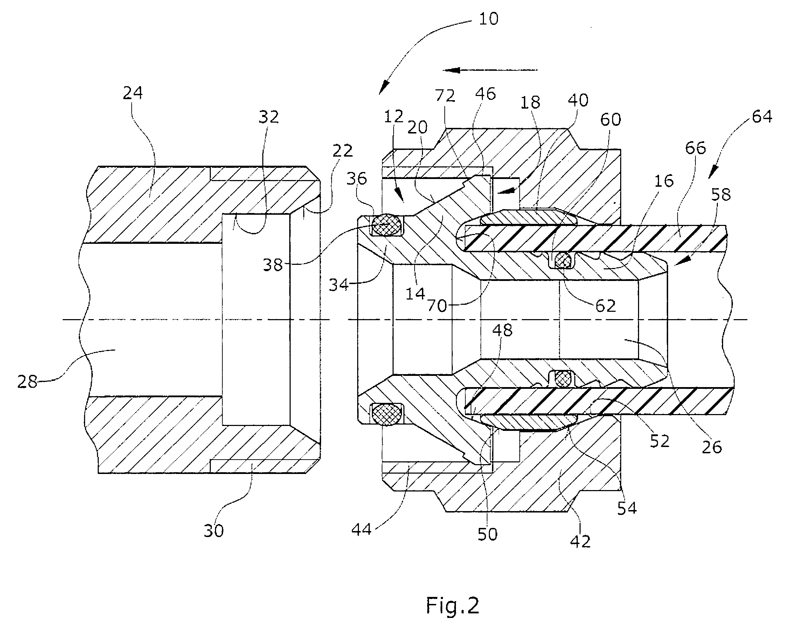

In den Fign. 1 bis 4 sind verschiedene Schnittansichten eines Ausführungsbeispiels eines Klemmfittings 10 gezeigt. Gemäß Fig. 1 weist der Klermmfitting 10 einen Fittingkörper 12 aus in diesem Ausführungsbeispiel einem insbesondere faserverstärkten Kunststoffmaterial (vorzugsweise hochtemperaturfest) auf, der einen sich konisch aufweitenden kragen 14 aufweist, innerhalb dessen sich eine konzentrisch dazu ausgebildete Stützhülse 16 angeordnet ist, die über das Ende 18 des Kragens 14 axial übersteht. Die Außenfläche des Kragens 14 ist konusförmig und bildet eine Anlagefläche 20, über die der Fittingkörper 12 an einer ebenfalls konusförmigen Aufnahmefläche 22 eines Fittingkörper-Gegenstücks 24 anliegt. Der Fittingkörper 12 und das Gegenstück 24 weisen jeweils Fluiddurchlässe 26,28 auf. Das Gegenstück 24, das beispielsweise aus Metall besteht, ist darüber hinaus an seinem die Aufnahmefläche 22 aufweisenden Ende mit einem Außengewinde 30 versehen. An die Aufnahmefläche 22 des Gegenstücks 24 schließt sich eine zylinderische Dichtfläche 32 an, die mit einem sich an die konische Anlagefläche 20 des Fittingkörpers 12 anschließende Fortsatz 34 dichtend zusammenwirkt. Im Bereich des Fortsatzes 34 weist der Fittingkörper 12 eine in radialer Richtung geöffnete Umfangsnut 36 mit einem darin angeordneten ringförmigen Dichtelement 38 aus einem elastomeren Material auf. Um die Stützhülse 16 des Fittingkörper 12 herum ist ein Klemmring 40 angeordnet, der in diesem Ausführungsbeispiel aus Kunststoff und insbesondere faserverstärktem und hochtemperaturfestem Kunststoff besteht. Der Klemmring 40 kann geschlossen oder geschlitzt ausgebildet sein. Fittingkörper 12 und Klemmring 40 befinden sich innerhalb einer Überwurfmutter 42 aus vorzugsweise Metall, die mit einem Innengewinde 44 versehen ist, das in Gewindeeingriff mit dem Außengewinde 30 des Gegenstücks 24 gebracht werden kann. Über den Umfang des Fittingkörpers 12 im Bereich von dessen Kragenerade 18 befinden sich radial auswärts weisende Vorsprünge 46, die klemmend mit dem Innengewinde 44 zusammenwirken und dafür sorgen, dass der Fittingkörper 12, nachdem er erstmalig in die Überwurfmutter 42 eingebracht worden ist, dort gehalten wird. Damit sind also Fittingkörper 12 und Klemmring 40 mit der Überwurfmutter 42 vormontierbar und als Einheit handhabbar, was sowohl den Transport als auch die Montage des Klemmfittings 10 vereinfacht.

Wie anhand von Fig. 1 zu erkennen ist, weist der Klemmring 40 eine in etwa trapezförmige Querschnittsfläche auf und ist mit einer an der Innenfläche 48 des Fittingkörper-Kragens 14 anliegenden ersten Schrägfläche 50 und mit einer an einer konischen Innenfläche 52 der Überwurfmutter 42 anliegenden zweiten Schrägfläche 54 versehen. Im übrigen Außenumfangsflächenbereich liegt der Klemmring 40 innen an der Überwurfmutter 42 an. Die konusförmige Fläche 52 der Überwurfmutter 42 geht in die Durchgangsöffnung 56 der Überwurfmutter 42 über. Konzentrisch durch diese Öffnung 56 ersteckt sich das dem Fittingkörper-Kragen 14 abgewandte axiale Ende 58 der Stützhülse 16, die mit einer radial auswärts weisenden Umfangsnut 60 versehen ist, welche ein ringförmiges Dichtelement 62 aus Elastomerrnaterial (beispielsweise Gummi) aufnimmt.

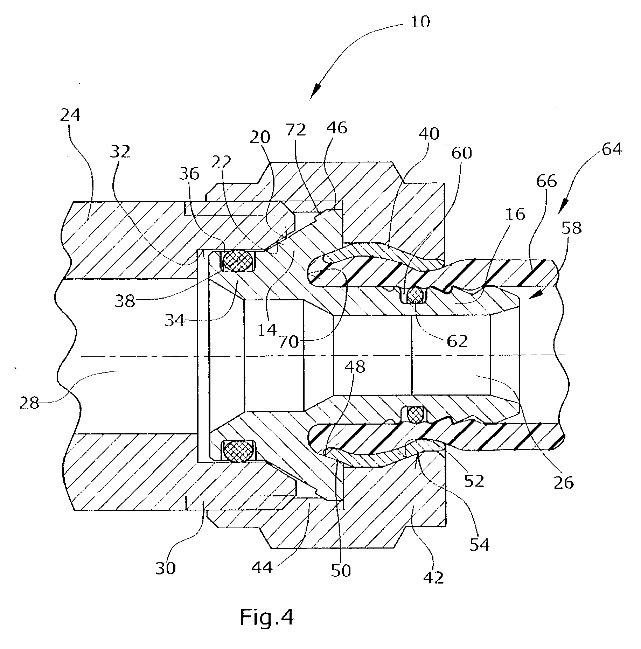

In Fig. 4 ist rechts das (Anschluss-)Ende 64 eines in diesem Ausführungsbeispiel aus Kunststoff bestehenden Rohres 66 gezeigt.

Zum Anschluss des Rohres 66 wird dieses durch die Durchgangsöffnung 56 hindurch in den Zwischenraum 68 zwischen der Stützhülse 16 und dem Klemmring 40 eingeschoben, bis es an dem Grund 70 des von dem Fittingkörper-Kragen 14 und der Stützhülse 16 gebildeten Aufnahmeraums anliegt. Alsdann wird die Überwurfmutter 42 auf das Gegenstück 24 aufgeschraubt. Diese Verschraubung kann bereits ansatzweise erfolgt sein, bevor das Rohr 64 durch die Öffnung 56 der Überwurfmutter 42 in den Klemmfitting 10 eingeschoben wird.

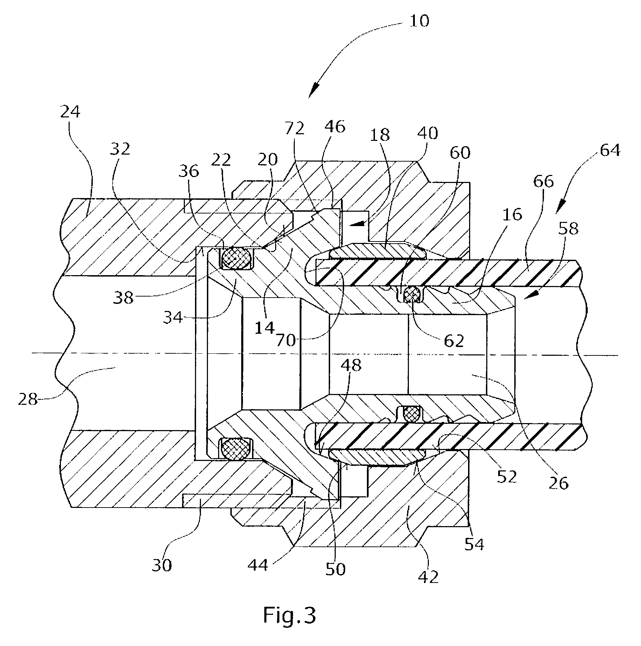

Im Verlauf der Verschraubung von. Überwurfmutter 42 mit Gegenstück 24 stellt sich dann die Situation gemäß Fig. 3 ein, in der die konische Innenfläche 52 der Überwurfmutter 42 und die ebenfalls konische Innenfläche 48 des Fittingkörper-Kragens 14 gegen die korrespondierenden Schrägflächen 54 und 50 an der Außenweite des Klemmrings 40 leicht andrücken. Beim weiteren Verschrauben der Überwurfmutter 42 wird nun der Kemmring 40 über seine Schrägflächen radial von außen gegen das Rohrende 66 gedrückt, wodurch dieses wiederum gegen die Stützhülse 16 gepresst wird. Dabei verformt sich der Klemmring 40, wie etwa in Fig. 4 gezeigt, wodurch im Bereich der Durchgangsöffnung 56 der Überwurfmutter 42 und insbesondere im Bereich der konusförmigen Fläche 54 der Überwurfmutter 42 Material des klemmrings 40 gelangt, der die Öffnung 56 unter teilweise Verdrängung des Materials des Rohres 64 verdrängt und somit für einen sicheren Sitz des Rohrendes 66 in dem Klemmfitting 10 und für eine zuverlässige Abdichtung des Rohres 64 gegenüber der Stützhülse 16 sorgt.

Wie anhand der Figuren ferner zu erkennen ist, sind die Fixiervorsprünge 46 des Fittingkörpers 12 bis in dessen konische Anlagefläche 20 verlängert. In diesem Bereich fungieren die Vorsprünge als Zentrier- bzw. Anschlagsvorsprünge 72, die ein zu tiefes Eintauchen des Fittingkörpers 12 in das Gegenstück 24 verhindern sollen, wenn der Konuswinkel der Aufnahmefläche 22 des Gegenstücks 24 größer als der Konuswinkel der Anlagefläche 20 des Fittingkörpers 12 ist. Diese Situation ist in den Figuren nicht dargestellt.

## Patentansprüche

1. Klemmfitting (10) für ein Heizungs- und/oder Sanitärrohr, mit
- einem Fittingkörper (12), der eine Stützhülse (16), auf welche ein Rohrende (66) aufschiebbar ist, und eine konusförmige Anlagefläche (20) aufweist,
- einem Gegenstück (24) für den Fittingkörper (12), welches mit einer konusförmigen Aufnahmefläche (22) zur Anlage durch die Anlagefläche (20) des Fittingkörpers (12) versehen ist,
- einem Klemmring (40) zum Umgeben des auf die Stützhülse (16) aufschiebbaren Rohrendes (66),
- einer ein Innengewinde (44) aufweisenden und mit dem Gegenstück (24) verschvanesbaven Überwurfmutter (42),
dachurch gekennzeichnet, dass
- die Überwurfmutter (42) zum Andrücken des Klemmrings (40) gegen den Fittingkörper (12) und zur klemmenden Anlage an dem Rohrende (66) in dessen auf die Stützhülse (16) aufgeschobenen Zustand, vorgeschen ist, und.
- der Fittingkörper (12) radial vorstehende Fixiervorsprünge (46) zur axialen Fixierung des Fittingkörpers (12) innerhalb der Überwurfmutter (42) an deren Innengewinde (44) oder anderen innenliegenden Flächenausgestaltungen gegen ein unbeabsichtigtes Ablösen von der Überwurfmutter (42) vor deren Verschraubung mit dem Gegenstück (24) aufweist.

2. Klemmfitting nach Anspruch 1, **dadurch gekennzeichnet, dass** die konusförmige Anlagefläche (20) des Fittingkörpers (12) Zentrier- und/oder Anschlagsvorsprünge (72) zur Anpassung an ein Gegenstück (24) mit einem von dem Konuswinkel der Anlagefläche (20) abweichenden Konuswinkel seiner Aufnahmefläche (22) aufweist.

3. Klemmfitting nach Anspruch 1 oder 2, **dadurch gekennzeichnet, dass** die Überwurfmutter (42) und der Fittingkörper (12) konusförmige Andrückflächen (52,48) zum Zusammenwirken mit Schrägflächen (54,50) an den axialen Enden des Klemmrings (40) aufweisen und dass der Konuswinkel der Andrückflache (48) des Fittingkörpers (12) kleiner ist als der der Andrückfläche (52) der Überwurfmutter (42).

4. Klemmfitting nach einem der Ansprüche 1 bis 3, **dadurch gekennzeichnet, dass** der Fittingkörper (12) und/oder der Klemmring (40) ein Kunststoffmaterial aufweist.

5. Klemmfitting nach Anspruch 4, **dadurch gekennzeichnet, dass** der Fittingkörper (12) und/oder der Klemmring (40) eine Faserverstarkung aufweist.

6. Klemmfitting nach einem der Ansprüche 1 bis 5, **dadurch gekennzeichnet, dass** die Stützhülse (16) mindestens eine Umfangsnut (60) mit einem von dieser aufgenommenen Dichtelement (62) zur dichtenden Anlage an der Innenfläche des Rohrendes (66) aufweist.

7. Klemmfitting nach einem der Ansprüche 1 bis 6, **dadurch gekennzeichnet, dass** der Fittingkörper (12) an seinem verjüngten Konusende eine Umfangsnut (36) mit einem von dieser aufgenommenen Dichtelement (38) zur dichtenden Anlage an der Innenfläche (32) des Gegenstücks (24) aufweist.

## Claims

1. A compression fitting (10) for a heating and/or sanitary pipe, comprising
- a fitting body (12) comprising a supporting sleeve (16) adapted to have a pipe end (66) slid thereonto, and a conical abutment face (20),
- a complementary part (24) for the fitting body (12), which is provided with a conical receiving face (22) for abutment by the abutment face (20) of the fitting body (12),
- a clamping ring (40) encompassing the pipe end (66) which can be slid on the supporting sleeve (66),
- a lock nut (42) having an inner thread (44) and being adapted to be screwed to the complementary part (24),
**characterized in that**
- the lock nut (42) is adapted for pressing the clamping ring (40) against the fitting body (12) and for clamping the abutment on the pipe end (66) in the condition when the pipe end (66) has been slid onto the supporting sleeve (16), and
- the fitting body (12) comprises radially protruding fixing projections (46) for axially fixing the fitting body (42) inside the lock nut (42) to the inner thread (44) or to other internal face structures thereof, to prevent the lock nut (42) from being inadvertently detached before it is screwed to the complementary part (24).

2. The compression fitting according to claim 1, **characterized in that** the conical abutment face (20) of the fitting body (12) comprises centering and/or abutment projections (72) for adaptation to a complementary part (24) whose receiving face (22) has a cone angle deviating from the cone angle of the abutment face (20).

3. The compression fitting according to claims 1 or 2, **characterized in that** the lock nut (42) and the fitting body (12) comprise conical press-on faces (52,48) configured to cooperate with oblique faces (54, 50) on the axial ends of the clamping ring (40) and that the cone angle of the press-on face (48) of the fitting body (12) is smaller than that of the press-on face (52) of the lock nut (42).

4. The compression fitting according to any of claims 1 to 3, **characterized in that** the fitting body (12) and/or the clamping ring (40) comprise a plastic material.

5. The compression fitting according to claim 4, **characterized in that** the fitting body (12) and/or the clamping ring (40) include a fiber reinforecement.

6. The compression fitting according to any of claims 1 to 5, **characterized in that** the supporting sleeve (16) is formed with at least one circumferential groove (60) accommodating a sealing element (62) therein for sealing abutment on the inner face of the pipe end (66).

7. The compression fitting according to any of claims 1 to 6, **characterized in that** the fitting body (12) on its tapered cone end is formed with a circumferential groove (36) accommodating a sealing element (38) therein for sealing abutment on the inner face (32) of the complementary part (24).

## Revendications

1. Raccord à serrage (10) pour un tuyau de chauffage et/ou sanitaire, comprenant
- un élément de raccord (12) qui présente une douille d'appui (16) sur laquelle une extrémité de tuyau (66) peut être enfilée, et une surface de contact conique (20),
- une contrepièce (24) pour l'élément de raccord (12), laquelle est dotée d'une surface de réception conique (22) destinée à venir en contact avec la surface de contact (20) de l'élément de raccord (12),
- une bague de serrage (40) destinée à entourer l'extrémité de tuyau (66) pouvant être enfilée sur la douille d'appui (16),
- un écrou-raccord (42) présentant un taraudage (44) et pouvant être vissé avec la contrepièce (24),
**caractérisé en ce que**
- l'écrou-raccord (42) est prévu pour presser la bague de serrage (40) contre l'élément de raccord (12) et venir en contact de serrage sur l'extrémité de tuyau (66) lorsque cette dernière est enfilée sur la douille d'appui (16), et
- l'élément de raccord (12) présentant des saillies de fixation (46) qui s'étendent radialement et permettent la fixation axiale de l'élément de raccord (12) à l'intérieur de l'écrou-raccord (42) au niveau de son taraudage (44) ou d'autres structures de surface intérieures, évitant ainsi que l'élément de raccord ne se desserre intempestivement de l'écrou-raccord (42) avant que ce dernier soit vissé avec la contrepièce (24).

2. Raccord à serrage selon la revendication 1, **caractérisé en ce que** la surface de contact conique (20) de l'élément de raccord (12) présente des saillies de centrage et/ou de butée (72) permettant de s'adapter à une contrepièce (24) dont l'angle conique de sa surface de réception (22) diffère de l'angle conique de la surface de contact (20).

3. Raccord à serrage selon la revendication 1 ou 2, **caractérisé en ce que** l'écrou-raccord (42) et l'élément de raccord (12) présentent des surfaces de pression coniques (52, 48) destinées à interagir avec des surfaces inclinées (54, 50) au niveau des extrémités axiales de la bague de serrage (40) et **en ce que** l'angle conique de la surface de pression (48) de l'élément de raccord (12) est plus petit que celui de la surface de pression (52) de l'écrou-raccord (42).

4. Raccord à serrage selon l'une des revendications 1 à 3, **caractérisé en ce que** l'élément de raccord (12) et/ou la bague de serrage (40) présente une matière plastique.

5. Raccord à serrage selon la revendication 4, **caractérisé en ce que** l'élément de raccord (12) et/ou la bague de serrage (40) présente un renforcement par fibres.

6. Raccord à serrage selon l'une des revendications 1 à 5, **caractérisé en ce que** la douille d'appui (16) présente au moins une rainure périphérique (60) avec un élément d'étanchéité (62) logé par celle-ci et destiné à venir en contact étanche sur la surface intérieure de l'extrémité de tuyau (66).

7. Raccord à serrage selon l'une des revendications 1 à 6, **caractérisé en ce que** l'élément de raccord (12) présente, à son extrémité conique rétrécie, une rainure périphérique (36) avec un élément d'étanchéité (38) logé par celle-ci et destiné à venir en contact étanche sur la surface intérieure (32) de la contrepièce (24).
